# EUROPEAN PATENT SPECIFICATION

(11) **EP 2 997 647 B1**
(45) Date of publication and mention of the grant of the patent: **20.11.2019**
(21) Application number: 12766141.1
(22) Date of filing: 14.09.2012
(51) Int. Cl.: H02K 7/116, H02K 16/00, F16K 31/04, F16K 31/53

(54) **VALVE ACTUATOR**
VENTILAKTUATOR
ACTIONNEUR DE VANNE

(30) Priority: 19.09.2011 GB 201116125
(43) Date of publication of application: 23.03.2016
(73) Proprietor: Rift Technology Limited, Worcestershire WV14 4JR (GB)
(72) Inventor: O'DONNELL, James, Malvern Worcestershire WR14 4JR (GB)
(74) Representative: Croston, David
(86) International application number: PCT/GB2012/052282
(87) International publication number: WO 2013/041842

(56) References cited:
- EP-A1- 2 040 356
- JP-A- 59 172 946
- JP-A- 59 172 949
- US-A- 6 028 384

## Description

The present invention is concerned with a valve actuator. More specifically, the invention is concerned with a valve actuator for use on a valve for use in the control of fluid flow in domestic and industrial applications.

Known electrically actuated valves for domestic and industrial applications are powered by a single electric motor, having an output shaft connected via a gearbox to an input drive shaft of a valve. Because a significant amount of torque is required, a gearbox is used to increase the torque from the motor.

In addition, metal gears are required in order to convert the output of the motor to the correct torque and speed at the actuator output. This increases the mass of the assembly and as such known actuators can be large and heavy.

Because known valves fitted with known actuators are installed in a pipeline, and can be particularly heavy, they may need additional support structures in order to support their weight in use.

Position indication in known valve actuators is not always provided. In any case, provision of such indication can be problematic because it is desirable to provide the indicator on the opposite side of the housing to the output shaft for visibility in use. This causes problems with traditional actuator architectures because the drive motor lies between the output shaft and the visible side of the housing.

A further problem with known actuators is a suitable user interface. Actuable buttons may become stuck or fail in corrosive or contaminant heavy environments. External electronic control means are susceptible to communications failures, and need to be provided with a suitable wired or wireless connection which adds cost and complexity.

A still further problem is control feedback. Some known actuators have electronic setup capability. User feedback is typically provided by an LCD screen or similar. This is problematic as it adds cost to the system, and can be easily obscured by dust and contaminants.

A further problem with known actuators is that functionality is only added at the manufacturing stage. The addition of required functions must be specified to the manufacturer who will add the required software and / or circuitry to the actuator before delivery to the customer. Therefore should the customer require further functionality at a later date, he must purchase a new actuator, or perform a complex and costly operation on the existing actuator which may involve interruption to his operations.

A still further problem with known actuators is adaptability to the various power sources available. There are a number of operating voltages used around the world. For example in the UK it is common to find 24V AC or DC, 110V AC or 240V AC. In Australia although the nominal voltage is 240V AC the nature of the supply often leads to voltage creep resulting in 265V being commonly seen. In Japan the voltage is nominally 110V AC; the distance from the source of power often leads to voltage drop as low as 80V. There is further requirement to run systems at 12V DC.

Due to the manufacturing cost of a universal power supply suitable for all of these sources, it is common within the industry to provide a range of products with power supplies provided for each market. Alternatively a range of products will each cover a range of voltages- for example by offering a low voltage supply product of say 12-24V AC/DC, and a high voltage supply product of say 85- 240 V AC.

Alternatively, combing both these power supplies into a single system is costly, and often results in unused components throughout the life of the actuator.

Valve actuators require short bursts of high current. In order to provide an actuator with a wide range of torque outputs, a power supply capable of handling high current must be provided. Such power supplied are expensive- particularly if they need to be switched to provide a control input.

Documents JP 59 172946 A and US 602 83 84 disclose known actuators having several independent motors connected to a common output gearing.

Document EP2040356 discloses a driving train for a vehicle having two motors one for driving each wheel in which the motors have permanent magnet stators and the stator permanent magnets are shared among the two rotors. It is an object of the present invention to provide an improved valve actuator.

According to a first aspect of the present invention there is provided a valve actuator according to claim 1.

Advantageously, splitting the drive into a plurality of smaller motors offers significant performance improvements. The same power output can be achieved with using less motor material (i.e. copper and permanent magnets). The provision of a plurality of driving rotors also allows the torque to be split into individual gear trains. Because the torque is split, each gear train can be made significantly lighter than a traditional metal / steel gear gearbox. For example, each gear train can be constructed from a plastics material which is also easier and cheaper to manufacture. This advantage is emphasised by placing all gearing in the gear train before the torques are summed at the final drive.

Preferably each gear train comprises a plurality of gears rotatable about an axis parallel to the output axis. Advantageously this means that only spur gears are required, which are simpler and cheaper to manufacture than e.g. worm gears.

Preferably the plurality of rotors are equally spaced about the output axis. This provides a compact arrangement.

Preferably the plurality of rotors are configured for rotation about respective axes parallel to the output axis, in which groups of at least 2 rotors are arranged into rows extending from the output axis, when the actuator is viewed in a plane perpendicular to the output axis. More preferably there are 3 rows of rotors forming a "Y" shape.

Preferably 2 rotors in each arm are arranged to simultaneously drive a common input gear of a respective sub-train. This means, for example, that 6 motors require only 3 sub-trains.

At least two of the plurality of rotors share a common stator magnet. Preferably the actuator comprises at least 3 rotors, each of which shares a stator magnet with an adjacent rotor.

This is beneficial in reducing the amount of magnetic material required, which in turn reduces the cost and weight of the actuator.

More than one rotor can be arranged on a single shaft, the rotors having individual stators, or a pair of unitary stators running the length of the shaft, resulting in a long, thin rotor arrangement. A benefit of driving a single shaft with more than one rotor is that the number of gears is reduced.

Each rotor arrangement may be provided in layers, stacked on top of each other and using common shafts spanning the layers. This also reduces the number of gears required. The commutators for such a system may be combined or stacked.

Preferably each rotor is configured to rotate in the same rotational direction in use.

Alternatively the actuator may use a plurality of separate electric motors, each comprising individual rotors and stators. Preferably there are at least 3 separate electric motors.

The provision of a plurality of electric rotors, either using common stator magnets, or as separate motors assembled together, in order to provide the required output has many advantages over the prior art. These include a significant saving in the weight of the motors, as well as the weight of a gear box, which can be constructed from more lightweight material due to the division of the total output torque required across the number of motors installed (e.g. six motors would each provide one sixth of the torque etc).

A traditional brushed electric motor of a known valve actuator may run at 12V DC at 3A, providing (for example) 60 mNm of output torque at 6000 rpm (628 rad/s). This may be referred to as original motor A "OM-A". In known valve actuator systems, such a motor would drive a gearbox to produce an output of 120 Nm torque at 3 rpm (0.31 rad/s). Such gear boxes are known in the art and reduce the speed by a factor of 2000 whilst increasing the torque by the same factor. It will be noted that in valve actuator applications, a high-torque, low-speed drive is generally required. Such a combined actuator and gear box will be referred to as original motor system "OMS-A".

In OMS-A, losses through the gear box may be assumed to be 1 to 2% of the total output.

The present invention breaks the single OMS-A motor, referenced above, into six individual, smaller motors with the aim of producing the same mechanical output.

If the rotor coil of the above referenced motor is split into motors having six equal parts, each new individual motor would provide 10 mNm at 6000 rpm (one-sixth of the output torque at the same speed). By summing the output torques at the same speed, the same output as the original single motor system OMS-A described above, would be provided.

It will be noted that each new smaller motor (which we will referred to as NM-1 to NM-6) will each only be required to carry one-sixth of the current, that is 0.5A at 12V DC. It will also be noted that the rotor wire needs only to be one-sixth of the thickness in order to carry this smaller current. As such, the amount of wire mass required for the six individual motors compared with the original motor OMS-A is approximately 80% less (i.e. only 20% or one fifth of the original wire mass).

OM-A is a permanent magnet DC motor. As such the stator contains a permanent magnet. Because the power requirement of each motor when more than one motor is installed is reduced, the magnetic flux across the motor coil is also reduced. In other words, each of NM-1 to NM6 requires one sixth of the flux (and thus one sixth of the magnetised material).

In addition the rotor of NM-1 to NM-6 is much smaller than OM-A. Therefore the gap required between the stators in order to surround the rotor of each motor is reduced. As such as well as requiring one sixth of the flux, each motor only requires it to be established across a smaller gap. This leads to a further benefit, by an inverse square law relative to the amount of magnetic material required. Therefore each of NM-1 to NM-6 requires less than one-sixth of the magnetic material in OM-A. In reality, the approximate size and weight reduction of the total magnet mass is approximately 80%.

In a similar system which utilises electro-magnets to establish the magnetic field of the stator, a similar power reduction into the stator coils would also be realised. This is because the strength of the magnetic field is dependent upon the power within the electromagnetic coil, and the air gap, both of which can be reduced for smaller motors.

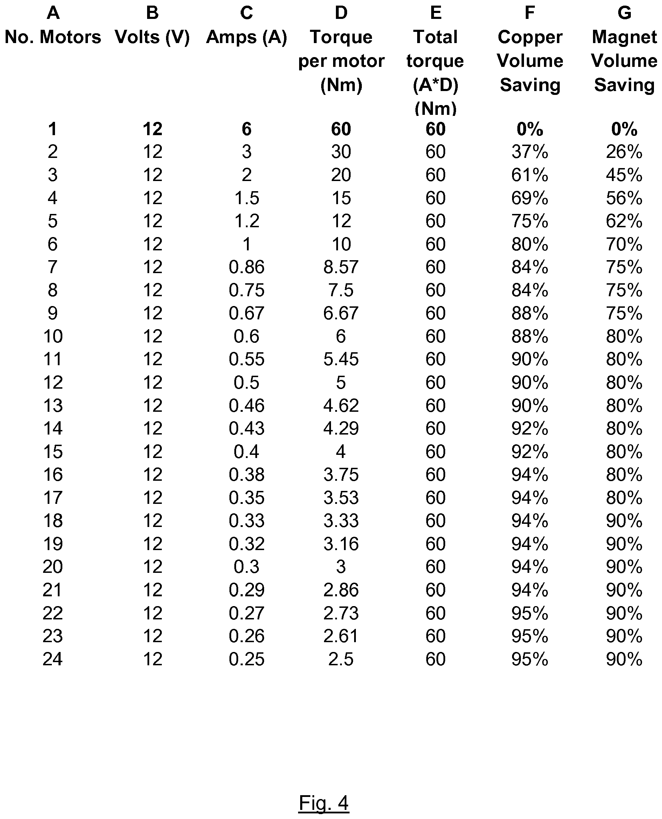

Turning to figure 4, various combinations of motors are shown in tabular form, with the voltage and current required per motor listed. The total torque is always 60Nm. With the reduction in current comes the associated reduction in core wire diameter, and an associated reduction in cross sectional area in mm² (which is proportional to the copper mass used). The final column represents the reduction in copper material required. The present example uses 6 motors and as such realises a reduction of about 80%.

An experiment on a known industrial ball valve results in a known single motor actuator (24V, 0.6A) turning the valve through 90 degrees (from an open to a shut position) in 16 seconds. Using six smaller motors with the same total power requirement (24V, 0.6A) turns the same valve in 3 seconds. This is a clear energy saving of around 80%.

An additional benefit of the present invention is that the reduction of current in each motor NM-1 to NM-6 means that the brushes can be made from steel, rather than carbon, which in part results in a much longer life of the motor. For example, a typical steel brush small motor of the above type will last approximately 875 hours compared to OM-A which may only last 500 hours.

Small rotors have a high start up torque, larger rotors have a lower start up torque but a comparatively high running torque at low speed. As such, a further benefit of the present invention the provision of both a high speed and a high torque from the same unit. Stall speed is also improved.

Preferably the plurality of electric motors comprises at least 3 motors, although any number is envisaged. It will be noted from figure 4 that 6 motors is the optimum in terms of benefit in materials savings when offset against cost and complexity.

Preferably each gear sub-train comprises at least:
an initial stage configured to gear the output from the respective rotor,
a first intermediate stage configured to gear the output from the initial stage, and,
a final stage configured to engage the primary output gear.

Each gear assembly may comprise a second intermediate stage between the first intermediate stage and the final stage. The initial stage and the second intermediate stage may be coaxially aligned, and the first intermediate stage and the final stage may be coaxially aligned.

Each of the coaxially aligned gear stage pairs may be mounted for rotation on a common shaft (such that they can rotate relative to one another). By coaxially mounting alternate stages they will contra-rotate which will reduce inertial effects and stresses on the gear system.

This also provides a very compact gear arrangement.

Preferably the drive train comprises gears constructed from a plastics material, which is a benefit of "splitting" the system torque.

According to a second aspect of the present invention there is provided a valve actuator comprising:
a plurality of electric motor rotors;
a plurality of electric motor stators proximate the rotors; and,
a drive train comprising:
   a plurality of sub-trains, each sub-train driven by at least one rotor, and,
   a final drive comprising a primary output gear and a primary output shaft for connection to a valve member drive formation, the primary output shaft defining an output axis,
in which each sub-train is configured to simultaneously drive the primary output gear,
in which the plurality of rotors surrounds the output axis on the side of the primary output gear opposite the primary output shaft,
and in which the final drive comprises a rotary position indicator arm for rotation about the output axis, the indicator arm extending through the plurality of rotors.

The benefit of providing a plurality of motors to drive a single output in a valve actuator is that an indicator arm can be provided extending along the main output axis. This is not normally possible due to the presence of a single motor on that axis. The indicator arm provides the ability to deliver an output of the primary output shaft rotation to the opposite side of the actuator.

Preferably there is provided a position encoder responsive to rotation of the indicator arm, which position encoder is mounted proximate the rotary position encoder arm. More preferably the position encoder is positioned proximate a free end of the indicator arm.

Preferably there is a non-contact relationship between the indicator arm and the position encoder, for example the indicator arm may comprise a magnet, and the position encoder comprises a Hall effect sensor.

Preferably there is provided a control circuit board, and the position encoder being mounted on the control circuit board.

Preferably the actuator has a housing and a primary output shaft position indicator visible from outside the housing, which primary output shaft position indicator is responsive to the position encoder.

According to a third aspect of the invention there is provided a valve actuator comprising:
an electric motor;
an electronic controller; and,
a housing containing the motor and controller;
in which the housing comprises a plurality of external regions connected to respective internal capacitive sensors, each capacitive sensor configured to detect external human contact with the regions and to provide control input to the controller.

Advantageously this allows direct user control of the actuator without the need for moving buttons (which are prone to failure and fatigue).

Preferably the controller comprises a circuit board and the capacitive sensors are mounted on the circuit board.

Preferably the housing defines three dimensional surface features defining the regions, to allow the user to detect the regions in low light conditions. Preferably the surface features are protrusions or finger shaped recesses

Internal protrusions may be provided which extend inwardly of the housing, the internal protrusions corresponding to a respective region, the protrusions extending into contact with a respective capacitive sensor.

Preferably the housing is ruggedised, i.e. is a sealed unit for industrial use in harsh environments.

According to a fourth aspect of the invention there is provided a valve actuator comprising:
an electric motor;
an output member;
an electronic controller configured to control the operation of the motor to drive the output member;
a housing containing the motor and controller;
a user input means providing an input to the controller; and,
a plurality of indicators visible from outside the housing, in which the plurality of indicators is controlled by the controller to selectively either (i) indicate the position of the output member or (ii) indicate the result of an input from the user input means.

Preferably the plurality of lights are configured to indicate a position of an output member of the actuator.

According to a fifth aspect of the invention there is provided a valve actuator comprising:
an electric motor;
an output member;
an electronic controller configured to control the operation of the motor to drive the output member;
which valve actuator is provided with a plurality of inherent electronic communications and / or control features, and in which at least some of the inherent electronic communications and / or control features are electronically disabled.

Advantageously, all of the possible required features are inherent to the actuator, but electronically disabled. This avoids the need for the user to have actuators or actuator parts replaced. Instead, he can contact the supplier, who can update his subscription to activate the desired feature.

Activation can be provided on payment of a subscription, updated warranty, updated terms of service, the user's ability to use the feature safely etc.

Preferably a valve actuator control system is provided comprising:
a valve actuator according to the fifth aspect; and,
a remote server configured to selectively enable the inherent electronic communications and / or control features.

The remote server will contain e.g. a customer database and can be controlled by the supplier. Preferably the remote server contains user subscription data concerning the inherent electronic communications and / or control features.

The system also comprises a terminal, local to the actuator (i.e. local to the user) which local terminal is configured to send an activation request to the valve actuator, the activation request relating to an inherent electronic communications and / or control feature.

According to a sixth aspect of the invention there is provided a valve actuator comprising:
an electric motor;
an output member driven by the electric motor; and,
a local energy storage component arranged to power the electric motor;
wherein the electric motor is only supplied electricity by the local energy storage component.

Preferably there is provided a trickle charger configured to trickle charge the battery. Preferably the trickle charger comprises a universal power adaptor configured to accept a range of input sources, for example from 110 - 240V AC.

As mentioned, the valve actuator draws high current from its power source. Provision of a mains power supply for this purpose adds expense (high power supplies are more expensive than low power supplies because they need to carry high current) and is potentially dangerous to the user. By solely powering the adaptor from a local battery (by "local" we mean at the actuator, preferably within the housing) a high power can be drawn when required. This recognises the fact that although the actuator requires a significant amount of power, this is only ever for a short time (to open or close the valve) and as such during the remaining dormant time the trickle charger can recharge the battery using only a low power. Therefore a cheaper, low power adaptor can be used, which is also safer.

Preferably the local energy storage component is precharged, and the trickle charger is only used to "top up" the power levels.

Preferably the local energy storage component is a battery, capacitor or super capacitor. The local energy storage component is capable of providing the high current required by the actuator to produce high output torque. The charge in the local energy storage component is maintained using external power when available, by transforming and rectifying said external power to provide the low power required to trickle charge the rechargeable element.

The multi-motor system used to drive the actuator has a very low power consumption compared to known actuators. Because the lithium technology rechargeable batteries are available with very high capacities, in applications where the actuator has light use it is feasible that it could take more than a year before the battery charge has dropped to its level at which trickle charging commences, and therefore the cycles provided by the actuator to when trickle charging commences have consumed zero external energy.

Preferably the trickle charger has a maximum input power of one-quarter or less than the maximum power draw of the motors. Preferably the trickle charger has a maximum current input of 1A.

According to a sixth aspect of the invention there is provided a valve actuator comprising:
an electric motor;
an output member;
an electronic controller configured to control the operation of the motor to drive the output member in response to an input signal;
in which the electric controller is configured to control the electric motor in at least two of the following modes: (i) an actuator mode requiring a switched powered input signal, (ii) a solenoid mode requiring a binary input signal and (iii) a latched solenoid mode requiring a pulsed input signal.

Advantageously, by using an electric controller, the actuator can be configured to replace a variety of known valves without alternation of the input signal.

Preferably the actuator comprises:
a local energy storage component arranged to power the electric motor; and,
a trickle charger configured to trickle charge the local energy storage component,
which trickle charger is powered by the input signal.

The use of a trickle charged battery allows a low power control signal to be used to power the unit without either a separate high power supply, or a high power control signal which is expensive.

The invention also provides a fluid valve comprising a fluid valve actuator according to any preceding claim. The fluid valve may be a ball valve, and in particular a ball valve for a domestic or industrial fluid flow control application.

A valve actuator in accordance with the present invention will now be described with reference to the following figures in which:
FIGURE 1 is a schematic underside view of a part of a first valve actuator in accordance with the present invention;
FIGURE 2 is an underside schematic view of the valve actuator of Figure 1 showing a casing;
FIGURE 3 is a side section schematic view of the valve actuator of Figure 1 in an assembled condition with a ball valve;
FIGURE 4 is a table showing savings in the materials of the present invention;
FIGURE 5 is a schematic view of a part of a second valve actuator in accordance with the present invention;
FIGURE 6 is a schematic view of a part the valve actuator of Figure 5;
FIGURE 7 is a schematic view of a part of a third valve actuator in accordance with the present invention;
FIGURE 8 is a schematic view of a part of a fourth valve actuator in accordance with the present invention;
FIGURE 9 is a schematic view of a part of a fifth valve actuator in accordance with the present invention;
FIGURE 10 is a schematic view of a part of a sixth valve actuator in accordance with the present invention;
FIGURE 11 is a schematic view of a part of a seventh valve actuator in accordance with the present invention;
FIGURE 12 is a schematic view of a part of an eighth valve actuator in accordance with the present invention;
FIGURE 13 is a perspective view of a ninth valve actuator in accordance with the present invention,
FIGURE 14 is a plan view of the valve actuator of Figure 13;
FIGURE 15 is a perspective view of a circuit board of the actuator of Figure 13;
FIGURE 16 is a perspective view of the valve actuator of Figure 13 with the casing omitted;
FIGURE 17 is a perspective view of the valve actuator of Figure 13 with part of the casing omitted;
FIGURE 18 is a perspective view of a part of the valve actuator of Figure 13;
FIGURE 19 is a perspective view of a part of the valve actuator of Figure 13;
FIGURES 20a to 20c are plan views of a part of the valve actuator of Figure 13 in various states of operation;
FIGURE 21 is a plan view of a part of the valve actuator of Figure 13 in another state of operation; and,
FIGURE 22 is a schematic view of a communications system utilising the actuator of Figure 13.

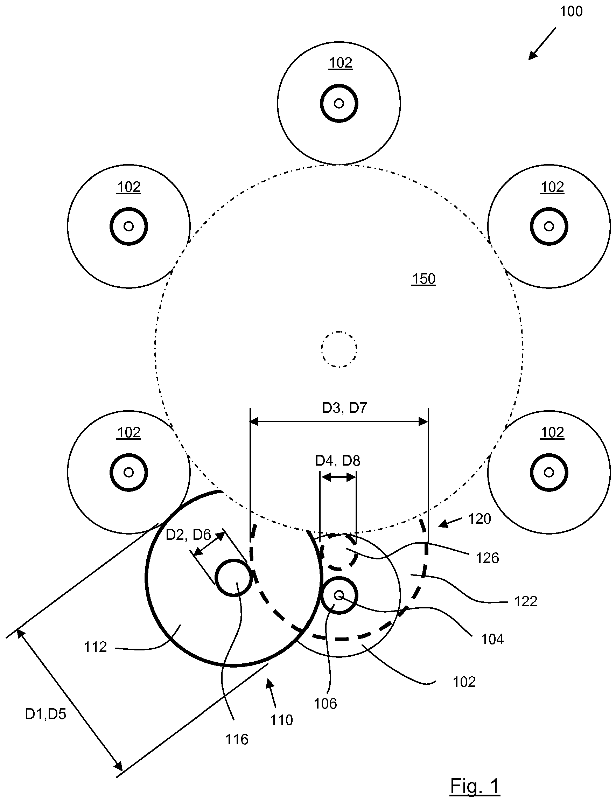

Turning to Figure 1, the valve actuator 100 comprises six permanent magnet DC brushed electric motors 102.

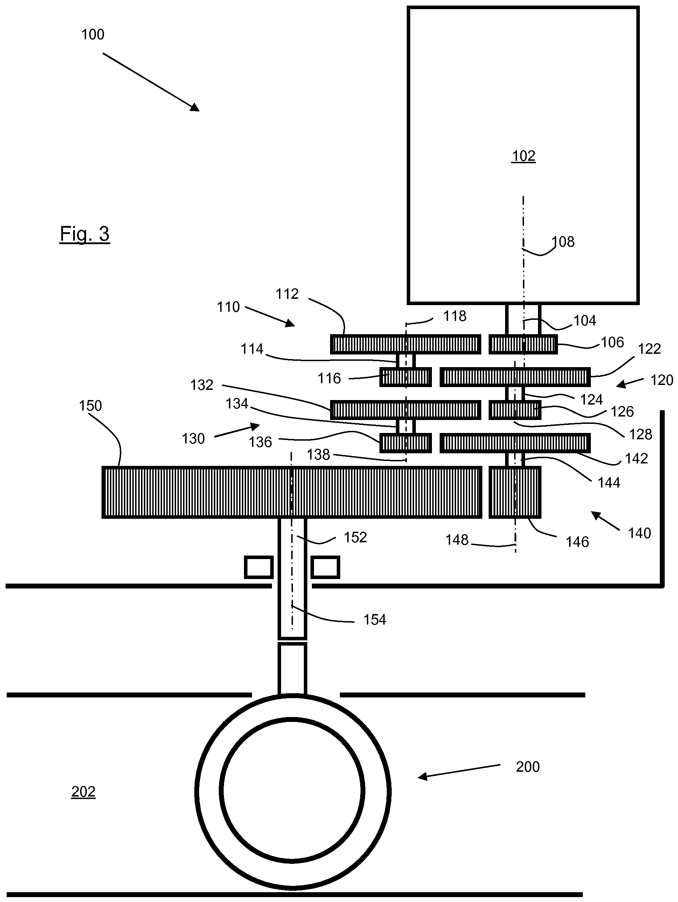

Each electric motor 102 has an output shaft 104 on which a motor output gear 106 is mounted. The output shaft 104 and motor output gear 106 share a motor axis 108 (see Figure 3). Parallel to and offset from the motor axis 108, a first gear assembly 110 is provided having an input gear 112 of diameter D1, connected by a shaft 114 to an output gear 116 having a diameter D2. The gears 112, 116 and the shaft 114 are mounted to rotate about a first gear assembly axis 118. A second gear assembly 120 is provided, having an input gear 122 having a diameter D3 connected by a shaft 124 to an output gear 126 having a diameter D4. The gears 122, 126 and the shaft 124 are mounted to rotate about a second gear assembly axis 128.

The third gear assembly 130 is provided comprising an input gear 132 having a diameter D5, connected by a shaft 134 to an output gear 136 having a diameter D6. The gears 132, 136 and the shaft 134 are mounted to rotate about a third gear assembly axis 138. A fourth gear assembly 140 is provided having an input gear 142 having a diameter D7, connected by a shaft 144 to an output gear 146 having a diameter D8. The gears 142, 146 and shaft 144 are arranged to rotate about a fourth gear assembly axis 148.

The valve actuator 100 comprises a primary output gear 150 connected to an output shaft 152 for rotation about an output axis 154.

In use, the axis 108, 118, 128, 138, 148, 154 are all parallel. The gear assemblies 110, 120, 130, 140 successively form a drive train between the electric motor 102 and the output shaft 152. As such, the motor output gear 106 is engaged for rotation with the input gear 112 of the first gear assembly 110. The output gear 116 of the first gear assembly 110 is engaged for rotation with the input gear 112 of the second gear assembly 120. The output gear 126 of the second gear assembly 120 is engaged for rotation with the input gear 132 of the third gear assembly 130. The output gear of the third gear assembly 130 is engaged for rotation with the input gear 142 of the fourth gear assembly 140. The output gear 146 of the fourth gear assembly 140 is engaged for rotation with the primary output gear 150 of the valve actuator 100.

Due to the fact that each of the input gears 112, 122, 132, 142 each has a larger diameter (D1, D3, D5, D7 respectively) than the output gears 116, 126, 136, 146 (D2, D4, D6, D8 respectively) the gear chain steps down the speed of the electric motor 102 and consequently increases the torque thereof such that the input at the primary output gear 150 is of a relatively low speed and high torque compared to the output shaft 104 of the motor 102.

By making the input gears 112, 122, 132, 142 the same diameter (D1=D3=D5=D7), and the output gears 116, 126, 136, the same diameter (D2=D4=D6) the alternate gear assemblies 110, 130 can be stacked on top of each other and coaxial (i.e. axes 118 and 138 align). Alternate gear assemblies 120, 140 are also stacked and coaxial (i.e. axes 128 and 148 align). This makes the gear train more compact.

Referring back to Figure 1, six such assemblies are provided comprising six electric motors 102, equally spaced around the output axis 154 of the actuator. As such, each of the output gears 146 of the gear chains engages in a different position around the circumference of the output gear 150 such that the forces applied to the output gear 150 are cumulative across each of the six motors 102.

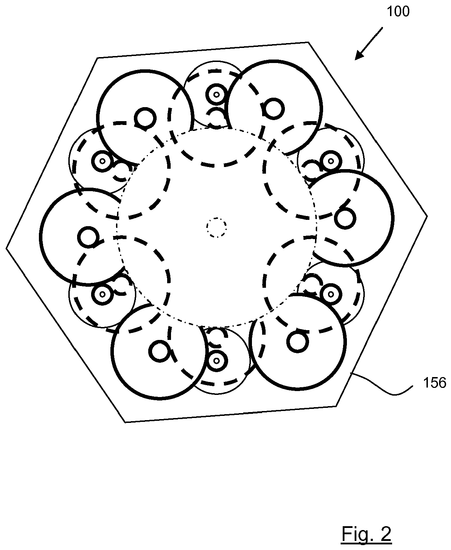

Referring to Figure 2, the entire assembly is placed within a compact housing 156.

Figure 3 shows the primary output shaft 152 connected to a valve, specifically a ball valve 200 for rotation thereof within a valve conduit 202.

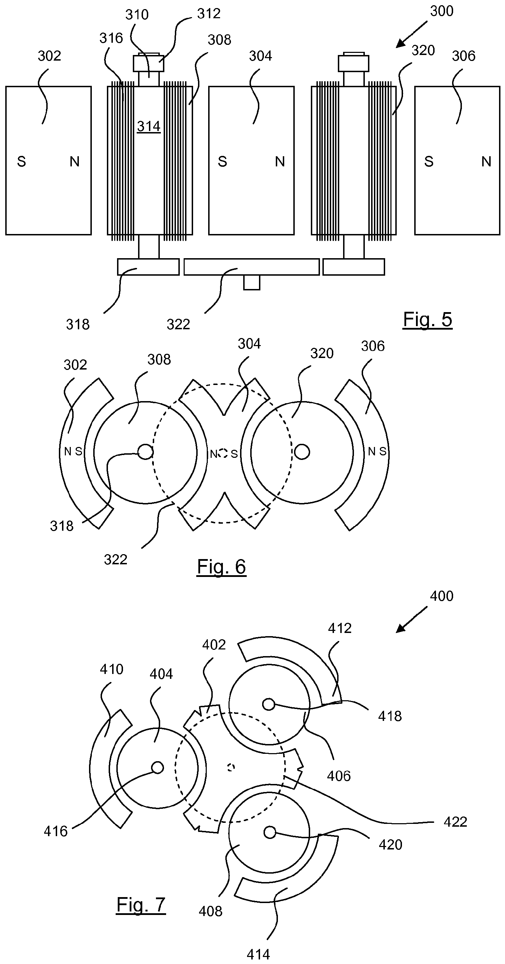

Figures 5 to 11 show an alternative architecture for the present invention, which instead of utilising a series of individual motors (which can be obtained "off the shelf"), a custom built motor can be provided in a single housing.

Referring to figures 5 and 6, an actuator 300 comprises a first permanent magnet stator 302, a second permanent magnet stator 304 and a third permanent magnet stator 306. Each of the stators is aligned with North-South (NS) orientation the same.

A first electric motor rotor 308 is positioned for rotation between the North and South poles of the first and second stators 302, 304 respectively and comprises a shaft 310, a terminal 312 for connection to an electricity supply (e.g. a commutator in a brushed motor), a core 314 and windings 316. The shaft is connected to an output gear 318.

A second electric motor rotor 320 is positioned between the North and South poles of the second and third stators 304, 306 respectively. It is substantially identical to the first rotor 308.

The output gears 318 of the rotors 308, 320 can be summed with a gear train per the earlier embodiments of the invention. A primary output gear 322 is shown for exemplary purposes, but it will be understood that a gear arrangement with a much higher ratio may be provided.

Turning to Figure 7, a further example is shown in which an actuator 400 comprises a central stator 402 surrounded by a first rotor 404, a second rotor 406 and a third rotor 408. Each rotor is provided with a peripheral stator 410, 412, 414 respectively which has a pole opposite to the outer face of the central stator. Each rotor 404, 406, 408 has an output gear 416, 418, 420 meshed with an example gear train in the form of a primary output gear 422.

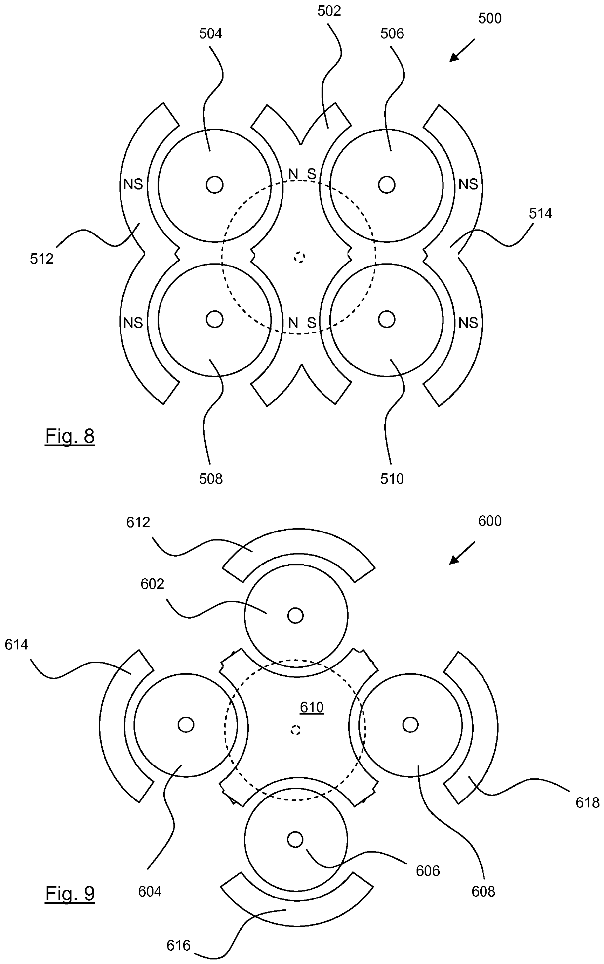

Figures 8 and 9 show alternative arrangements for four rotors. The actuator 500 of Figure 8 has a central stator 502 with four rotors 504, 506, 508, 510 positioned in two pairs either side thereof. A first pair of rotors 504, 508 is provided with a first common peripheral stator 512, and a second pair of rotors 506, 510 is provided with a second common peripheral stator 514.

Figure 9 shows a similar actuator 600, but four rotors 602, 604, 606, 608 are evenly spaced at 90 degrees around a common stator 610, and each rotor 602, 604, 606, 608 has its own respective peripheral stator 612, 614, 616, 618 respectively.

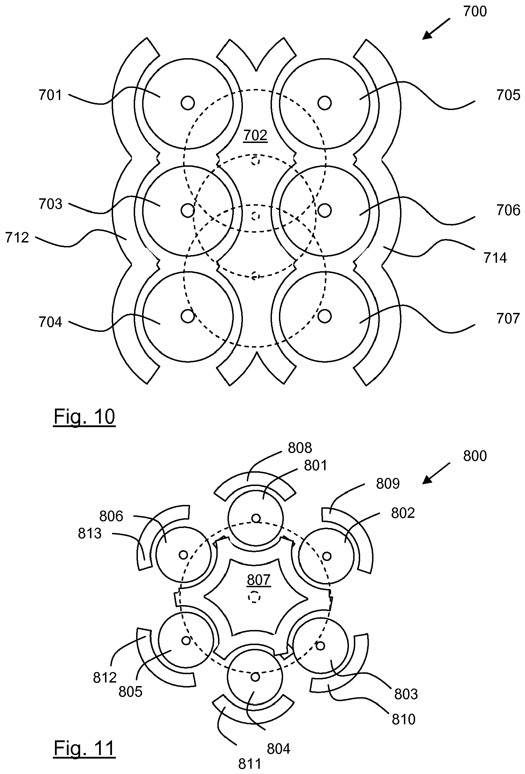

Figures 10 and 11 show the equivalent actuators to figures 8 and 9 but with six rotors instead of four.

Figures 8 and 9 show alternative arrangements for four rotors. The actuator 700 of Figure 8 has a central stator 702 with six rotors 701, 703, 704, 705, 706, 707 positioned in two sets of three either side thereof. A first set of rotors 701, 703, 704 is provided with a first common peripheral stator 712, and a second set of rotors 705, 706, 707 is provided with a second common peripheral stator 714.

Figure 11 shows a similar actuator 800, but four rotors 801, 802, 803, 804, 805, 806 are evenly spaced at 60 degrees around a common stator 807, and each rotor 801, 802, 803, 804, 805, 806 has its own respective peripheral stator 808, 809, 810, 811, 812, 813 respectively.

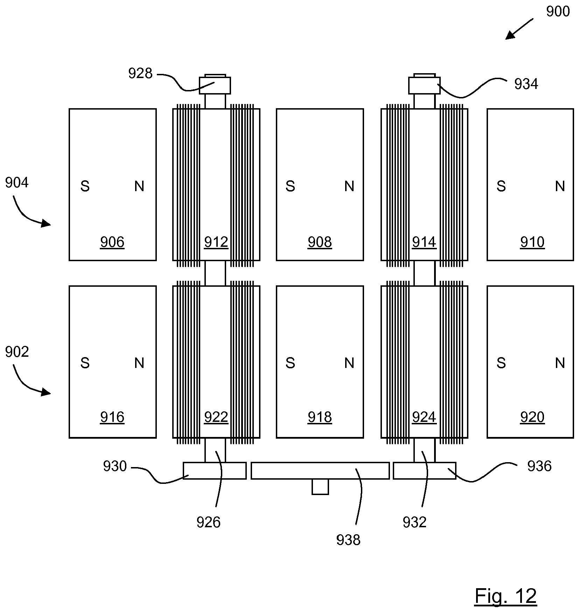

Turning to Figure 12, a two-layer actuator 900 is shown having a first layer 902 and a second layer 904, each equivalent to the actuator 300. The first layer 902 has a first, second an third stator 906, 908, 910 with two rotors 912, 914 interspersed therebetween. Similarly the second layer 904 has a first, second an third stator 916, 918, 920 with two rotors 922, 924 interspersed therebetween.

The rotors 912, 922 are mounted on a common shaft 926 having a commutator 928 at a first end, and an output gear 930 at a second end. Similarly, the rotors 914, 924 are mounted on a common shaft 932 having a commutator 934 at a first end, and an output gear 934 at a second end.

The gears 930, 936 are engaged with a primary output gear 938.

In the example of Figure 12, the shafts 926, 932 are integral, although the rotors on each shaft may be arranged to rotate relative to one another, or even counter rotate (by appropriately reversing the rotor windings or stator magnetic orientation) to provide a balancing effect.

Advantageously, stacking the rotor sets reduces the number of gears for a given actuator assembly. Further layers can be added if required, such that the actuator shape can be constructed to fill the space available.

Variations of the above embodiment are possible within the scope of the present invention.

In the actuator of Figure 12, each pair of stators 906, 916; 908,918; 910, 920 could be formed as single stator magnets. In this case, the combined stator in place of stators 906, 916 would serve rotors 912, 922, the combined stator in place of stators 908, 918 would serve all four rotors, and the combined stator in place of stators 910, 920 would serve rotors 914, 924. This means that only three stators would be required for four rotors.

In a still further alternative embodiment, a plurality of rotors could be positioned on a single shaft, each of the rotors being served by a pair of magnets extending the length of the actuator. This would result in a long, thin actuator arrangement.

The commutators 928, 934 may be single, combined or multiple commutators.

The actuator may be combined in a single unit with a valve, such as a ball valve. Alternatively, the actuator may be provided as a stand-alone unit which can subsequently be engaged with a valve. For example, the present invention may be provided as a retrofit assembly for an existing valve installation.

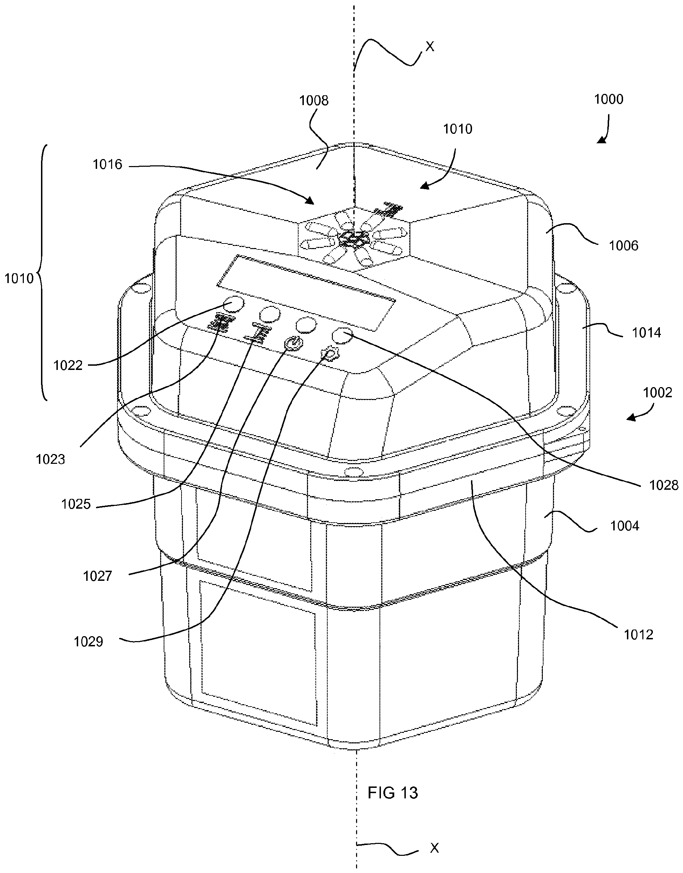

Turning to Figures 13 to 19, there is shown a valve actuator 1000 in accordance with the present invention. The valve actuator 1000 comprises a housing 1002 having a lower housing 1004 and an upper housing 1006. In the present embodiment "lower" refers to the bottom of Figure 13, and "upper" to the top, although it will be understood that the location of features depends on the orientation of the actuator, which may vary depending upon installation.

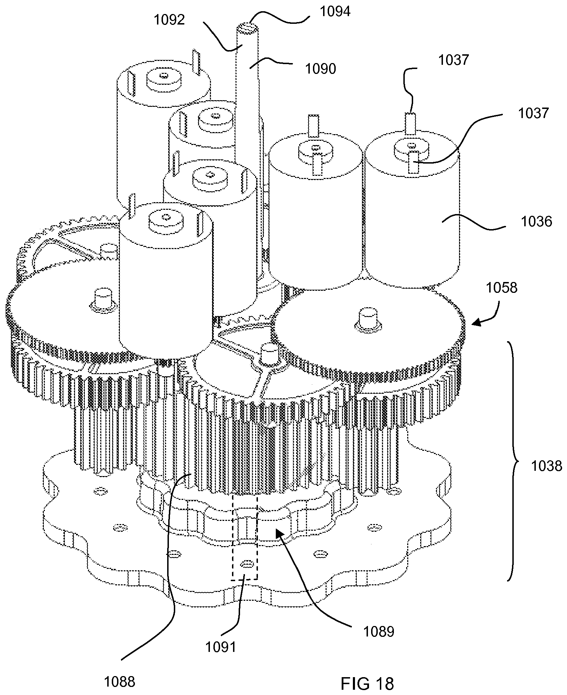

The upper housing 1006 defines an end surface 1008 comprising a user interface 1010 which will be described in more detail below. The lower housing 1004 defines an aperture through which a primary output shaft 1091 (outlined in Figure 18) of the actuator 1000 projects for a rotation about a primary axis 'X'. The primary output shaft 1091 is engageable with a valve (not shown) to drive a valve member in rotation to open and close the valve.

The lower housing 1004 is a cup-like structure comprising a radially outwardly projecting flange 1012 at its open end. The upper housing 1006 is also a cup-like structure comprising a radially outwardly projecting flange 1014 at its open end. The flanges 1012, 1014 are sealed together with mechanical fasteners in order to provide an enclosed housing 1002 defining a volume in which the working parts of the actuator sit.

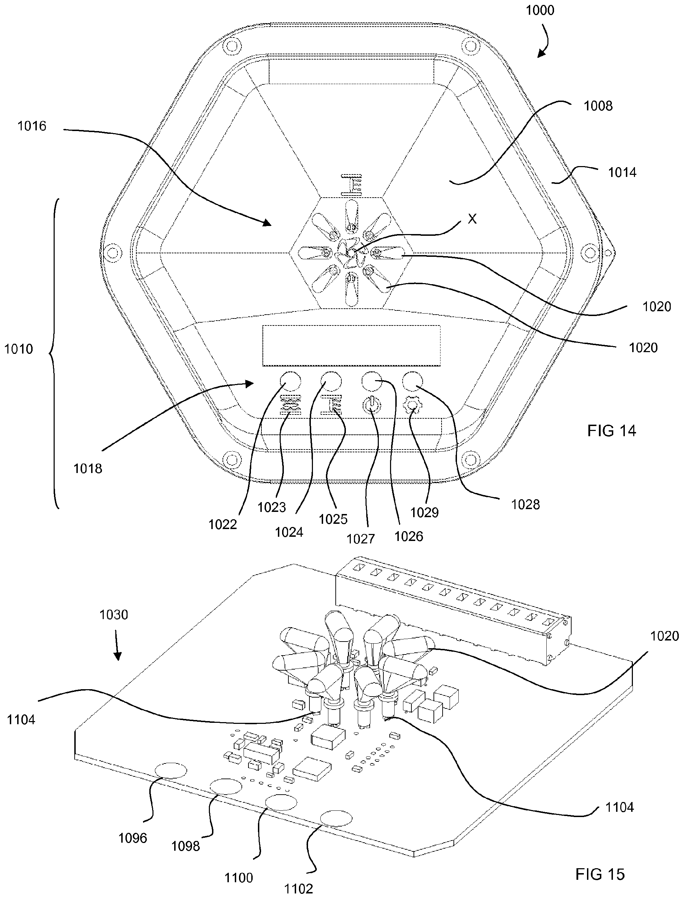

The upper and lower housings 1004, 1006 are generally hexagonal in cross-section in a similar manner to the housing 156 of the actuator 100. The housing 1002 is centred on a primary axis X, which is the axis of rotation of the primary output shaft 1091. Referring to Figure 14, the end surface 1008 of the upper part of the housing 1006 is also generally hexagonal in plan view.

The user interface 1010 comprises an indicator 1016 and an input means 1018. The indicator 1016 comprises a series of eight transparent light tubes 1020 which are equally spaced around the primary axis 'X' of the actuator 1000. The function of these tubes 1020 will be described in further detail below.

Turning to the input means 1018, a series of four individual raised contact regions or finger shaped recesses 1022, 1024, 1026, 1028 are defined in a row proximate an edge of the end surface 1008. Each of the contact regions 1022, 1024, 1026, 1028 is slightly raised as shown in Figure 13 or formed as a finger shaped recess in order to provide tactility for the user in e.g. low light conditions. It will be noted that each of the contact areas 1022, 1024, 1026, 1028 contains no moving parts, it is simply a raised area of the housing upper part 1006 or a finger shaped recess in that housing. Proximate the contact areas raised symbols 1023, 1025, 1027, 1029 are provided so the user can detect them in low light conditions. On the opposite (interior) side of the surface 1008, the areas 1022, 1024, 1026, 1028 extend into the housing as will be described below.

The housing 1002 is constructed from a thick, hard-wearing, rugged plastics material and is sealed between the flanges 1012, 1004 in order to inhibit ingress of contaminants and/or fluids. It will also be noted that the tubes 1020 in the indicator means 1016 are also well sealed for this purpose. The output shaft (not shown) is also sealed against the lower part of the housing 1004.

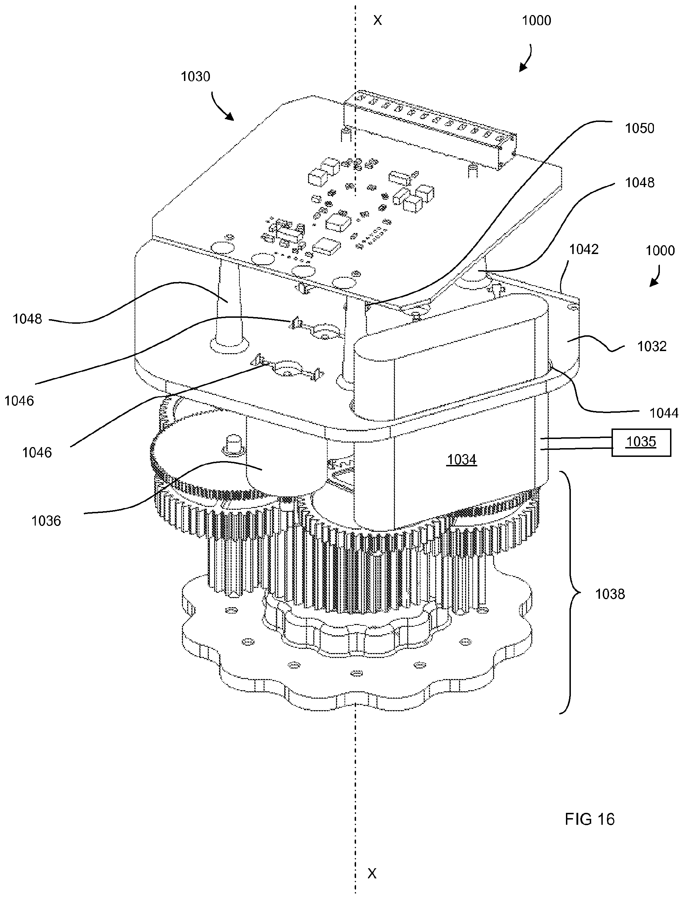

Turning to Figure 16, the actuator 1000 is shown absent the housing 1002. The actuator 1000 comprises a frame 1032 on which a circuit board 1030 is mounted. A battery 1034, a plurality of motors 1036 and a drive train 1038 are also provided.

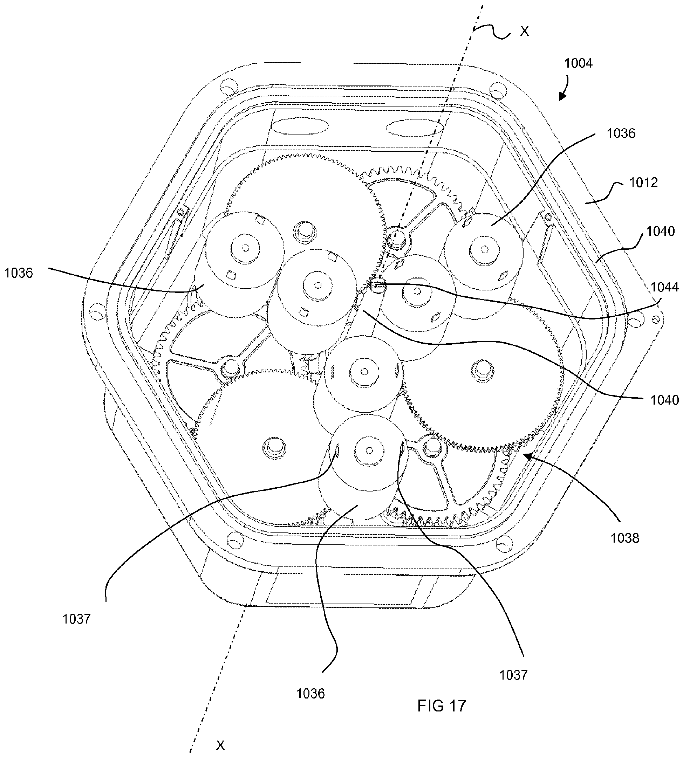

Figure 17 shows the motors 1036 and the drive train 1038 in situ within the lower housing 1004. Figure 18 shows the motors 1036 and the drive train 1038 in isolation.

With reference to Figure 16, the frame 1032 fits within the housing 1002 on a frame seat 1040 within the top flange 1012 of the lower housing 1004. As such, the frame 1032 is held in position within the housing 1002. The seat 1040 is generally the same hexagon shape as the interior of the lower housing 1004.

The frame 1032 is generally planar and flat and defines a battery aperture 1044 which holds the battery 1034 in position. The frame 1032 also defines motor mounting formations 1046 in order to hold the motors 1036 in place and provide access to their contacts 1037. On the opposite side of the frame 1032 to the motors 1036 there are provided four upright posts 1048 which extend towards and into the upper housing 1006. As shown in Figure 16, the posts 1048 support the circuit board 1030 at an appropriate position within the upper housing 1006 as will be discussed below).

The frame 1032 defines a central aperture 1050 aligned with the primary axis X.

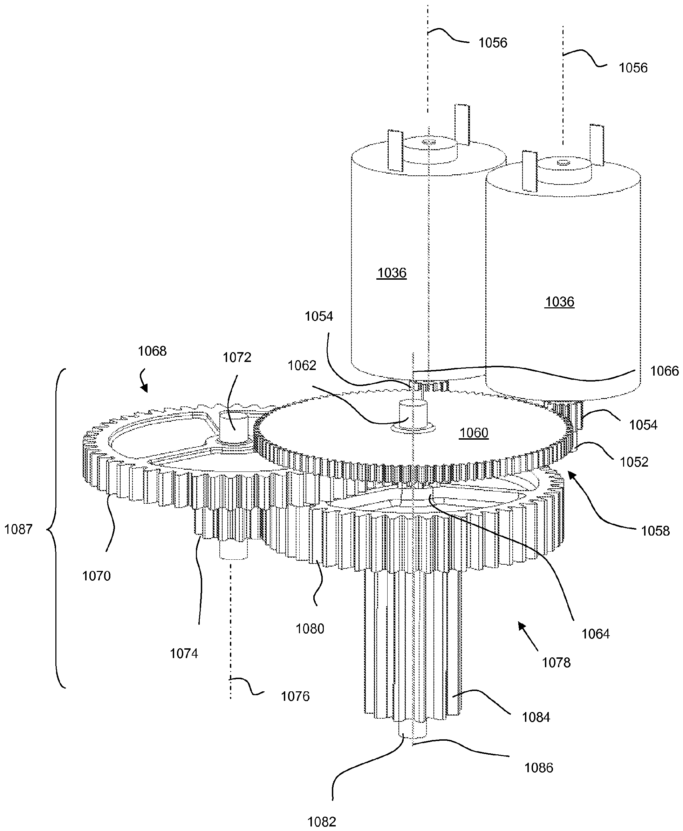

Turning to Figure 17, each of the motors 1036 (of which there are six) is supported by the frame 1032. The motors are arranged in pairs, each pair extending radially out from the central axis 'X' of the actuator 1000 to form three "arms" 120 degrees apart. Turning to Figure 19, each of the motors 1036 has an output shaft 1052 on which a motor output gear 1054 is mounted. The output shaft 1052 and output gear 1054 rotate about a motor axis 1056.

The drive train 1038 comprises three sub-trains 1087 and a final drive 1089.

Each pair of motors 1036 engages with a first gear assembly 1058 of a respective sub-train. The first gear assembly 1058 comprises an input gear 1060 connected by a shaft 1062 to an output gear 1064. The gears 1060, 1064 and shaft 1062 are arranged to rotate together about a first gear assembly axis 1066.

A second gear assembly 1068 is provided, having an input gear 1070 connected by a shaft 1072 to an output gear 1074. The gears 1070, 1074 and the shaft 1072 are mounted to rotate together about a second gear assembly axis 1076.

A third gear assembly 1078 is provided, comprising an input gear 1080 connected by a shaft 1082 to an output gear 1084. The gears 1080, 1084 and the shaft 1082 are mounted to rotate about a third gear assembly axis 1086.

The output gear 1084 is arranged to drive a primary output gear 1088 of the final drive 1089 as shown in Figure 18. The final drive also comprises the primary output shaft 1091 of the actuator 1000 via an un-geared connection. There is a direct drive between the primary output gear 1088 and shaft 1091.

It will be noted that the first gear assembly axis 1066 and the third gear assembly axis 1086 are aligned. It will also be noted that the first gear assembly 1058 and the third gear assembly 1078 will rotate in the same direction, although at different speeds about the aligned axes 1066, 1068.

In addition to driving the primary output shaft 1091 to the actuator 1000, the primary output gear 1088 drives a central indicator shaft 1090 which extends opposite the output shaft of the actuator 1000 through the respective gear trains, through the motors 1036 and through the aforementioned aperture 1050 in the frame 1032 to a free end 1092 proximate the underside of the circuit board 1030. At the free end 1092 there is positioned a magnet 1094. The shaft 1090 is aligned with the primary axis 'X'.

Turning to Figure 15, the circuit board 1030 is shown in more detail. The circuit board 1030 is configured to control the motors 1036 in the manner which will be described below. The circuit board 1030 is configured to control the power supply to the motors 1036, and in particular control their electrical input to thereby control their mechanical output. The board 1030 comprises four capacitive sensors 1096, 1098, 1100 and 1102. The sensors 1096 to 1102 are capable of controlling various modes and functions of the control circuitry 1030 as part of a human machine interface, as will be described below.

It will be noted that when the circuit board 1030 is positioned on the posts 1048, each of the capacitive sensors 1096, 1098, 1100, 1102 is placed in contact with the underside of the upper part of the casing 1006 such that each of the contact areas of the input means 1018 is in respective contact with one of the capacitive sensors 1096, 1098, 1100, 1102. In this manner, when a user touches the various regions 1022, 1024, 1026 1028 of the input array 1018, he can provide a control input to the circuit board 1030 which in turn will control the movement of the primary output shaft 1091.

As shown in Figure 15, the circuit board 1030 comprises a plurality of LEDs 1104. Each of the LEDs 1104 has one of the transparent light tubes 1020 associated therewith and projecting upwardly therefrom. As such, when the LEDs 1104 are illuminated, this is visible from the exterior of the housing 1002.

The circuit board 1030 comprises a Hall effect sensor (not visible) on its underside, in the centre of the LEDs 1104 and aligned with the axis 'X'. The Hall effect sensor can detect the rotational position of the indicator shaft 1090 by detecting the position of the magnet 1094. As such, the position of the primary output shaft of the actuator 1000 can be detected by the circuit board 1030. This position can be indicated by selective illumination of the various LED's 1104 as will be described below. The position can also be used as a feedback signal for the actuator control algorithms.

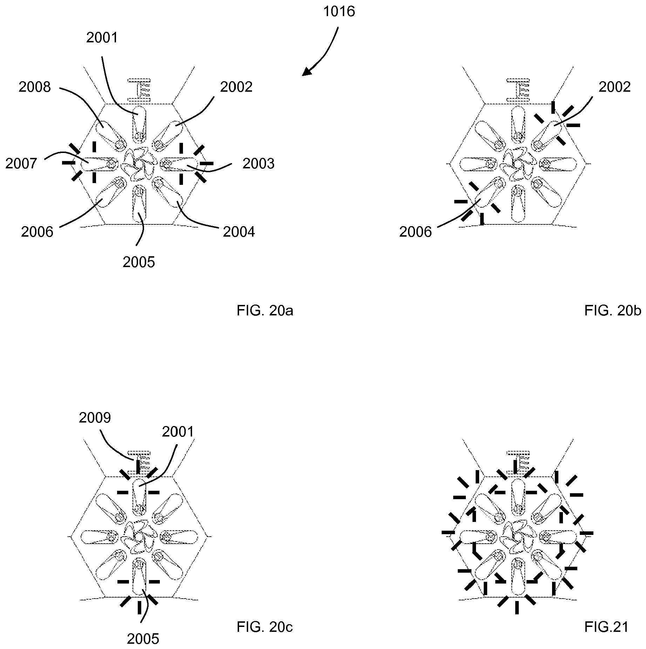

Referring to Figures 20a to 20c, the indicator 1016 comprises a series of 8 lights labelled 2001 to 2008, which as mentioned are controlled by the circuit board 1030. During normal or "position indicator" use, the lights 2001 - 2008 are configured to display the position of the primary output shaft 1091. The lights are activated in opposite pairs for redundancy, and for clear indication of position (in low light conditions, a pair of lights provides a clearer indication of position). As shown in Figure 20a, the lights 2003 and 2007 are illuminated showing that the valve is in the "open" position.

By contacting the region 1022 (see Figure 14) when in manual mode, the user commands the circuit board to power the motors and rotate the primary output shaft by 90 degrees to move to a closed position. As shown in Figure 20b, the shaft has rotated, which in turn rotates the indicator arm 1090, which rotation is detected by the Hall effect sensor on the underside of the circuit board 1030, which produces a signal to illuminate lights 2002 and 2006 at the 45 degree position.

Once the output shaft has rotated to the 90 degree closed position, the lights 2001 and 2005 are fully illuminated as shown in Figure 20c. For clarity, a "closed" indicator 2009 is provided proximate the light 2001.

Feedback from the Hall effect position encoder is also used within an output member control system to feedback the position of the valve and take appropriate action (e.g. to stop the motors when actuated to the desired position).

When the primary output shaft is between lights- e.g. between 0 and 45 degrees, adjacent lights are partially illuminated to indicate this. For example, at 22.5 degrees towards the closed position, the lights 2002, 2003, 2006 and 2007 are illuminated at 50 percent brightness to indicate the fact that the output is at a midway position.

In manual mode, the actuator can be moved to the open position (light 2003) by pressing region 1022 proximate the "open" symbol 1023 and to the closed position (light 2001) by pressing region 1024 proximate the "closed" symbol 1025.

As well as indicating the position of the primary output member, the indicator is also used to provide feedback on setup and / or configuration commands. As well as the "open" and "closed" contact regions 1022, 1024, there is provided a power contact region 1026 proximate a power symbol 1027 and a settings contact region 1028 proximate a settings symbol 1029. A wide range of functions can be performed with these four regions 1022, 1024, 1026, 1028.

### For example:

### 1. Mode switching

The actuator 1000 can be switched between a remote control mode (RCM) and a local control mode (LCM). In the former case, the actuator is controlled remotely via a wired or wireless data connection into the circuit board 1030. In the latter case the regions 1022, 1024 become active to locally control valve operation.

To switch into LCM from RCM, the settings region 1028 is pressed for 5 seconds and released within a further 3 seconds. This enters LCM stage 1, and all of the lights flash red as shown in Figure 21.

From stage 1, the operator then represses settings region 1028 for 3 seconds, releasing within a further 5 seconds. All of the lights are illuminated green, with the exception of lights 2001, 2003, 2005, 2007 which are successively illuminated red to indicate that LCM has been entered.

Should the operator not follow the above instructions with respect to the fixed duration of button press, and release within the predetermined further time, LCM will not be entered.

In LCM mode, when either the open region 1022 or the closed region 1024 is pressed for longer than 3 seconds, the valve moves to full open or full closed regardless of whether contact with the region is then broken.

### 2. "Off' mode

The actuator 1000 can be placed in an "off' mode in which the actuator accepts no commands, but the lights still indicate valve position.

To switch into "off' from LCM, the power region 1026 is pressed for 5 seconds and released within a further 3 seconds. This enters "off' stage 1. To indicate this, the lights flash between two configurations- one where all lights are green except the light 2001, and one where all lights are red except 2001.

From stage 1, the operator then represses power region 1026 for 5 seconds, releasing within a further 5 seconds. Lights 2001, 2003, 2005, 2007 flash red to indicate the "off' condition. If the power region 1026 is not held for 5 seconds, releasing within a further 5 seconds, then the unit reverts to "off' stage 1.

Should the operator not follow the above instructions with respect to the fixed duration of button press, and release within the predetermined further time, "off mode" will not be entered.

### 3. Revert to LCM from "off'

LCM can be re-entered from "off' by pressing the power region 1026 for 5 seconds and released within a further 3 seconds. This enters "LCM". To indicate this, the lights flash as follows:
Stage (i): 2001, 2003, 2005, 2007 green, all others red;
Stage (ii): 2001, 2003, 2005, 2007 red, all others green;
Stage (iii): 2001, 2005 red, all others green; and,
Stage (iv): 2001 red, all others green.

Should the operator not follow the above instructions with respect to the fixed duration of button press, and release within the predetermined further time, LCM will not be entered.

### 4. Revert to RCM from LCM

To switch intoRCM from LCM, the settings region 1028 is pressed for 5 seconds and released within a further 3 seconds. This enters RCM stage 1, and all of the lights flash green.

From stage 1, the operator then represses settings region 1028 for 3 seconds, releasing within a further 5 seconds. All of the lights are illuminated green, with the exception of lights 2001, 2003, 2005, 2007 which are successively de-illuminated to indicate that RCM has been entered.

Should the operator not follow the above instructions with respect to the fixed duration of button press, and release within the predetermined further time, RCM will not be entered.

In RCM mode, the actuator is remotely controlled.

As well as the above referenced functions, the actuator 1000 is configured to operate in the following modes:
(i) actuator;
(ii) solenoid; and,
(iii) latching.

Known actuators are directly powered by a high power input line, which as well as powering the motor, also provides the control signal for opening or closing the valve by switching between a plurality of input connectors.

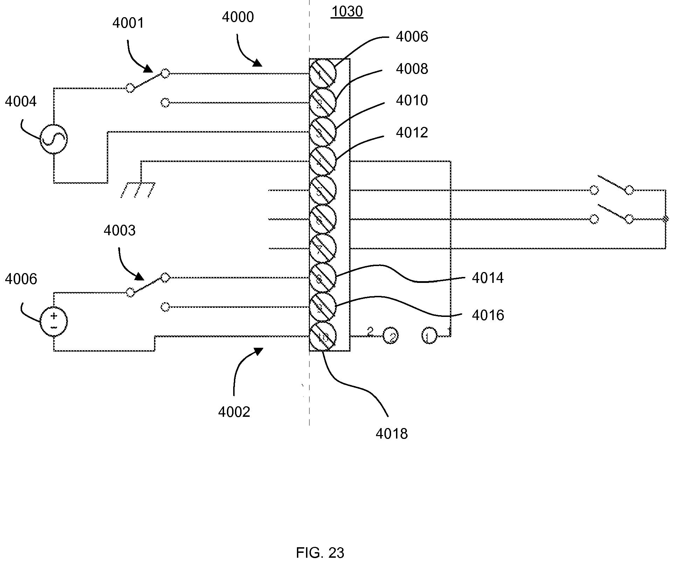

In the same way, the actuator 1000 of the present invention is responsive to a powered input signal to simply replace a traditional actuator. Referring to Figure 23, part of the circuit board 1030 is shown having both (alternative) AC input 4000 for an AC power source 4004 and DC input 4002 from a DC power source 4006.

The AC input 4000 comprises the following connections:
4006 open;
4008 close;
4010 common; and,
4012 earth.

The AC source 4004 can be switched by switch 4001 by the user between "open" and "close" to operate the actuator 1000 as will be described below.

The DC input 4002 comprises the following connections:
4014 open;
4016 close; and,
4018 common.

DC live can be switched by switch 4003 the user between "open" and "close" to operate the actuator 1000 as will be described below.

The power input signal (either AC or DC) is also connected to a trickle charger, as will be described below.

In the (i) actuator mode, the actuator 1000 is configured to receive a powered input signal (AC or DC as described above) which is either "open" or "close". The signal is always on- i.e. continuously providing either the "open" or "close" signal at any given time. When first switching from "open" signal to the "close" signal (i.e. with switch 4001 or 4003), the actuator 1000 moves the output member to the closed position using the feedback position sensor, where it is held in place by the inherent non-backdrivability of the gearbox. The same applies when moving from the "closed" to the "open" position.

In (ii) solenoid mode, the actuator 1000 is configured to receive a powered signal which is either "on" or "off'. For example, the connection 4008 may simply not be connected. When a power signal is received, the actuator 1000 moves to the open position, and when the power signal is removed the actuator 1000 returns to the closed position under battery power alone. In this manner, the actuator 1000 acts like a solenoid valve.

In (iii) latching mode, the actuator 1000 is configured to receive a constant power input and a separate pulsed signal. In this instance, when the actuator receives a pulse, it will move to the open or closed position from the closed or open position respectively. The constant power input is used to trickle charge the battery, as will be described below.

Various other functions as apparent to the skilled person, and can be managed using the aforementioned touch sequences.

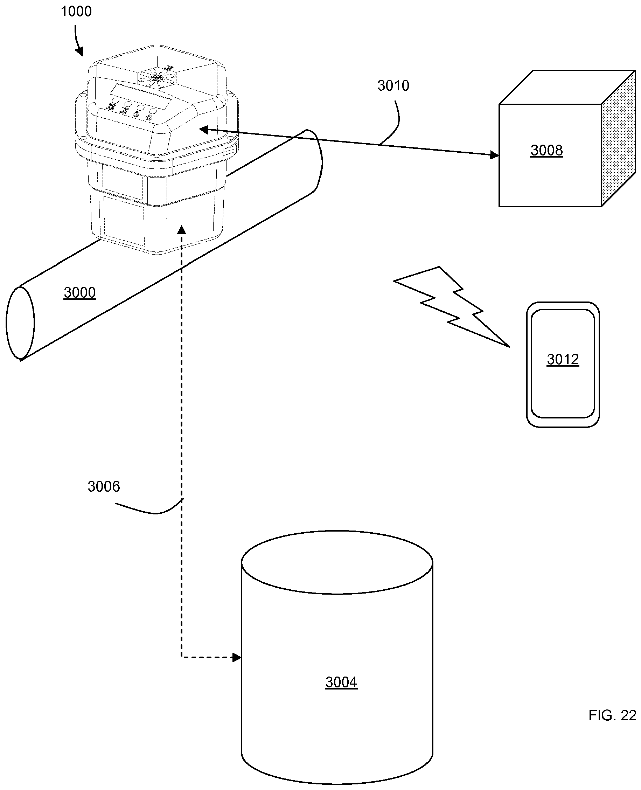

Turning to Figure 22, the actuator 1000 is installed to control the flow of an industrial fluid through a pipe 2000. The circuit board 1030 of the actuator 1000 is configured to operate the actuator 1000 to control the flow of fluid in the conduit 3000 via a suitable valve 3002 (not visible).

The circuit board comprises a processor, a memory and an output to selectively power the motors 1036. The circuit board is in communication with a remote server 3004 via a data connection 3006 which may be wired or wireless. The remote server 3004 can provide e.g. firmware updates from the actuator 1000, and can collect data such as usage statistics. The circuit board 3030 is also in communication with a local control terminal 3008 via a wired data connection 3010. The terminal 3008 can control operation of the actuator in remote control mode (RCM).

Software is provided on the memory of the actuator 1000 which when executed by the processor can provide a number of features. These features include:
1. Communication via different input / ouput protocols (Modbus, Fieldbus, Profibus, HART, DeviceNet);
2. Communication via different methods (bluetooth, wi-fi) relevant to pre-installed hardware on the circuit board 1030;
3. Communication to and from different user interfaces (mobile apps / desktop software);
4. Output shaft speed control - the ability to set the output speed;
5. Torque profiling - the ability to set the torque provided by the output shaft;
6. Bespoke torque trip - the ability to define a torque trip whereby the unit stops operating at a given torque to avoid self-damage,
7. Enhanced data logging- i.e. electronic storage and communication of usage data,
8. Command input setup- what the touch regions do, whether certain modes of operation are enabled,
9. Actuator mode, solenoid mode, latching mode.

One or more of the above features are inherently provided within the unit. All of the necessary software and hardware for their performance is provided within the unit. That said, not all features are enabled. From the outset, the unit is provided with a basic set of enabled features (open / close both remotely and locally). All other features, although inherent, are disabled.

Should the user wish to use a particular non-standard feature (for example remote control via bluetooth with a cellular phone 3012) he issues the relevant command to the actuator 1000 using the terminal 3008.

The actuator 1000 will recognise this as a non-enabled feature and then check with the server 3004 as to whether the feature is permitted for use by the operator. The server may check, for example, that the operator has paid a subscription for that particular feature.

If approved, the actuator 1000 will enable the feature such that operation can be controlled by the phone 3012. For example, a smartphone app may be provided for such control.

The motors 1036 are all powered by the battery 1034 which is a 4 multi-cell Lithium battery typically based on the known 18650 battery style. The battery 1034 is a 14.8V pack that is capable of delivering over 20A output.

The battery 1034 is connected to a trickle charger 1035 which is arranged to charge the battery at a low power (in the order of milliamps). Therefore although the battery 1034 is configured to supply a high power to the motors 1036 for a short time (the time taken to rotate the valve member is in the order of seconds), the trickle charger has a much longer time available to charge the battery (i.e. when the valve is static). Therefore the trickle charger can be a much lower power.

The trickle charger 1035 is powered by a mains source (as described and shown in Figure 23), and comprises a universal power supply configured to receive a range of inputs at least including the 110 - 240V range. The trickle charger of the present embodiment is configured to accept an AC mains power connection 4004 of 85 - 300V at 50 - 60 Hz and at a maximum current of 0.1A. Alternatively, the charger can accept a DC input 4006 of 9 - 30V at a maximum current of 1A. Evidently these power requirements are well within safe limits (e.g. from a domestic level supply) and do not require special equipment like known actuators which require very high power inputs of 20A and above.

By contrast the power usage from the battery when the motors are operating is 5A at 14.8V for 60Nm output torque, and 10A at 14.8V for 120Nm output torque. At the maximum torque output of 150Nm the motors draw 12-13A.

The present invention allows for the external supply power (in the order of 8 - 30W) to be much lower than the internally required power (in the region of 200W). This is a result of recognising that the duty cycle of the motors is small compared to the time they spend dormant. Therefore a less expensive low power UPS can be used to trickle charge the batteries.

Other variations include stacking a further layer of motor and gear train assemblies onto the actuator described above to further increase the output torque.

Of course, the present invention may be used on any other type of valve requiring a rotary input. This rotary input may be part-turn, multi-turn and any type of valve requiring linear stem movement where the rotary output of the actuator of the present invention may be converted to a linear motion. For example the rotary output could be used in a rack and pinion system to convert rotary to linear motion, or used to drive a threaded valve stem rising through a rotating threaded nut or collar, to convert rotary to linear motion.

## Claims

1. A valve actuator comprising:
a plurality of electric motor rotors;
a plurality of electric motor stators proximate the rotors; and,
a drive train comprising:
a plurality of sub-trains, each sub-train driven by at least one rotor, and,
a final drive comprising a primary output gear and a primary output shaft for connection to a valve member drive formation, the primary output shaft defining an output axis,
in which each sub-train is configured to simultaneously drive the primary output gear, and in which the final drive is ungeared between the primary output gear and the output shaft **characterised in that**
the electric motor stators are permanent magnet stators and at least two of the plurality of rotors share a common stator permanent magnet.

2. A valve actuator according to claim 1, comprising at least 6 rotors, each of which shares a stator permanent magnet with an adjacent rotor.

3. A valve actuator according to claim 2, in which each rotor is configured to rotate in the same rotational direction in use.

4. A valve actuator according to any preceding claim, in which each sub-train comprises at least:
an initial stage configured to gear the output from the respective rotor,
a first intermediate stage configured to gear the output from the initial stage, and,
a final stage configured to engage the primary output gear.

5. A valve actuator according to claim 4, in which each gear assembly comprises a second intermediate stage between the first intermediate stage and the final stage.

6. A valve actuator according to any preceding claim, in which the drive train comprises gears constructed from a plastics material.

## Patentansprüche

1. Ventilstellglied, welches aufweist:
eine Vielzahl an Elektromotorrotoren,
eine Vielzahl an Elektromotorstatoren in der Nähe der Rotoren und
einen Antriebsstrang, welcher aufweist:
eine Vielzahl an Teilsträngen, wobei jeder Teilstrang von mindestens einem Rotor angetrieben wird, und
einen Achsantrieb, der ein primäres Ausgangszahnrad und eine primäre Ausgangswelle zur Verbindung mit einer Ventilgliedantriebsanordnung aufweist, wobei die primäre Ausgangswelle eine Ausgangsachse bestimmt,
wobei jeder Teilstrang so ausgestaltet ist, dass er gleichzeitig das primäre Ausgangszahnrad antreibt, und wobei der Achsantrieb zwischen dem primären Ausgangszahnrad und der Ausgangswelle nicht im Eingriff ist, **dadurch gekennzeichnet, dass** die Elektromotorstatoren Permanentmagnetstatoren sind und dass mindestens zwei von der Vielzahl an Rotoren sich einen gemeinsamen Stator-Permanentmagneten teilen.

2. Ventilstellglied nach Anspruch 1, welches mindestens 6 Rotoren aufweist, von denen jeder einen Stator-Permanentmagneten mit einem benachbarten Rotor teilt.

3. Ventilstellglied nach Anspruch 2, bei dem jeder Rotor so ausgestaltet ist, dass er sich im Gebrauch in der gleichen Drehrichtung dreht.

4. Ventilstellglied nach einem der vorhergehenden Ansprüche, bei dem jeder Teilstrang mindestens Folgendes aufweist:
eine Anfangsstufe, die ausgestaltet ist, um den Ausgang von dem jeweiligen Rotor in Eingriff zu bringen,
eine erste Zwischenstufe, die ausgestaltet ist, um den Ausgang von der Anfangsstufe aus zu schalten, und
eine Endstufe, die ausgestaltet ist, um das primäre Ausgangszahnrad in Eingriff zu bringen.

5. Ventilstellglied nach Anspruch 4, bei dem jede Getriebeanordnung eine zweite Zwischenstufe zwischen der ersten Zwischenstufe und der Endstufe aufweist.

6. Ventilstellglied nach einem der vorhergehenden Ansprüche, bei dem der Antriebsstrang Zahnräder aufweist, die aus einem Kunststoffmaterial hergestellt sind.

## Revendications

1. Actionneur de vanne, comprenant :
une pluralité de rotors de moteur électrique ;
une pluralité de stators de moteur électrique à proximité des rotors ; et
un train d'entraînement comprenant :
une pluralité de sous-trains, chaque sous-train étant entraîné par au moins un rotor, et
un entraînement final comprenant un pignon de sortie primaire et un arbre de sortie primaire
pour la connexion à une formation d'entraînement de membrure de valve, l'arbre de sortie primaire définissant un axe de sortie,
dans lequel chaque sous-train est configuré pour entraîner simultanément le pignon de sortie primaire et dans lequel l'entraînement final est non engrené entre le pignon de sortie primaire et l'arbre de sortie, **caractérisé en ce que**
les stators du moteur électrique sont des stators à aimant permanent et
au moins deux de la pluralité de rotors partagent un aimant permanent de stator commun.

2. Actionneur de vanne selon la revendication 1, comprenant au moins 6 rotors, chacun partageant un aimant permanent de stator avec un rotor adjacent.

3. Actionneur de vanne selon la revendication 2, dans lequel chaque rotor est configuré pour tourner dans le même sens de rotation en utilisation.

4. Actionneur de vanne selon l'une quelconque des revendications précédentes, dans laquelle chaque sous-train comprend au moins :
un étage initial intermédiaire configuré pour engrener la sortie du rotor respectif,
un premier étage intermédiaire configuré pour engrener la sortie de l'étage initial, et
un étage final configuré pour engager le pignon de sortie primaire.

5. Actionneur de vanne selon la revendication 4,
dans lequel chaque ensemble de pignon comprend un second étage intermédiaire entre le premier étage intermédiaire et l'étage final.

6. Actionneur de vanne selon l'une quelconque des revendications précédentes, dans lequel le train d'entraînement comprend des engrenages construits dans un matériau plastique.
